# EUROPÄISCHE PATENTSCHRIFT

(11) **EP 0 691 502 B1**
(45) Veröffentlichungstag und Bekanntmachung des Hinweises auf die Patenterteilung: **19.05.1999**
(21) Anmeldenummer: 95108953.1
(22) Anmeldetag: 10.06.1995
(51) Int. Cl.: F16L 37/084

(54) **Steckverbinder für Schlauch- und/oder Rohrleitungen**
Quick coupling for pipes
Raccord rapide pour tuyaux

(30) Priorität: 08.07.1994 DE 9411113 U
(43) Veröffentlichungstag der Anmeldung: 10.01.1996
(73) Patentinhaber: ARMATURENFABRIK HERMANN VOSS GMBH & CO., D-51688 Wipperfürth (DE)
(72) Erfinder: Geiger, Karl-Otto, D-51688 Wipperfürth (DE); Schultes, Karl-Heinz, Dr. Ing., D-50677 Köln (DE)
(74) Vertreter: Patentanwälte Dr. Solf & Zapf

(56) Entgegenhaltungen:
- WO-A-95/08074
- CH-A- 677 964
- DE-U- 8 711 334
- GB-A- 2 244 774
- US-A- 3 990 727

## Beschreibung

Die vorliegende Erfindung betrifft einen Steckverbinder für Schlauch- und/oder Rohrleitungen, bestehend aus einem Steckerteil mit einem in eine Stecköffnung eines Aufnahmeteils einsteckbaren Steckerschaft und mit mindestens zwei federelastischen Rastarmen, die sich parallel zur Steckachse jeweils mit Abstand zum Steckerschaft in Richtung dessen freien Endes erstrecken und im eingesteckten Zustand mit Rastnocken eine Stufenfläche des Aufnahmeteils arretierend hintergreifen, wobei mit den Rastarmen im Bereich der Rastnocken ein Ring verbunden ist, der sich mit radialem Abstand zum Steckerschaft in Umfangsrichtung erstreckt.

Ein derartiger Steckverbinder ist aus der CH-A-677 964 bekannt. Einen etwa gleichartigen Stand der Technik beschreibt aber auch die GB-A-2 244 774. Jeder dieser bekannten Steckverbinder weist ein mit den Federarmen verbundenes, umfänglich geschlossenes Ringelement auf. Deshalb ist es für die Funktion der Rastarme bzw. Rastnocken erforderlich, daß sich jeweils das Ringelement elastisch verformt. Dadurch kann aber auch durch eine entsprechende elastische Verformung des Ringelementes ein ungewolltes Lösen der Rastverbindung bewirkt werden, indem seitlich derart auf das Ringelement gedrückt wird, daß dieses oval verformt wird, so daß in der Folge dann die Rastarme radial nach außen gedrückt werden.

Ein weiterer, recht ähnlicher, insbesondere für Kraftstoffleitungen von Verbrennungsmotoren geeigneter Steckverbinder ist aus der DE 42 14 105 Al bekannt. Dieser Steckverbinder hat sich in der Praxis bereits recht gut bewährt, weil der Steckvorgang und das Verriegeln bzw. das Sichern der Verbindung sehr einfach und in einem Vorgang erfolgen kann. Dabei ist auch ein einfaches Lösen der Verbindung möglich, allerdings mittels einer Spreizklammer, die im Bereich eines zwischen den Rastarmen und dem Steckerschaft gebildeten Spaltes senkrecht zur Längsachse des Steckerschaftes verschiebbar geführt ist, so daß über Schrägflächen ein Spreizen der Rastarme möglich ist. Auch bei diesem bekannten Steckverbinder ist nachteilig, daß womöglich ein ungewolltes Lösen der Verbindung erfolgen könnte, und zwar durch bestimmte Gegenstände oder Fremdkörper, die in den Bereich der Rastarme bzw. Rastnocken gelangen könnten.

Der vorliegenden Erfindung liegt die Aufgabe zugrunde, einen bekannten Steckverbinder der beschriebenen Art so zu verbessern, daß ein ungewolltes Lösen der Verbindung weitgehend ausgeschlossen ist.

Erfindungsgemäß wird dies dadurch erreicht, daß der Ring als ein an mindestens zwei Umfangsstellen geschlitztes und so aus mindestens zwei relativ steifen, formstabilen Ringabschnitten bestehendes Schutzringelement derart ausgebildet ist, daß der Bereich der Rastnocken in Querrichtung weitgehend abgedeckt und dadurch gegen ein Eindringen von Gegenständen bzw. Fremdkörpern geschützt ist.

Durch die Erfindung wird erreicht, daß der zwischen dem Steckerschaft und den Rastarmen liegende Bereich der Rastnocken seitlich, d.h. in Querrichtung zur Steckachse, von dem Schutzringelement abgedeckt ist, so daß ein Eindringen von Teilen bzw. Fremdkörpern weitgehend ausgeschlossen ist. Dabei wird durch die erfindungsgemäße, geschlitzte Ausgestaltung des Schutzringelementes erreicht, daß dieses bzw. die dadurch gebildeten Ringabschnitte - im Vergleich zu den elastisch verformbaren Rastarmen - relativ steif und formstabil ausgebildet sein können, was günstig für die Schutzringfunktion ist. Die Rastarme bleiben federelastisch beweglich, und zwar jeweils zusammen mit dem zugehörigen Ringabschnitt des Schutzringelementes.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll im folgenden die Erfindung näher erläutert werden. Dabei zeigen:
- Fig. 1: eine teilgeschnittene Seitenansicht eines erfindungsgemäßen Steckverbinders und
- Fig. 2: eine Ansicht des Steckerteils in Pfeilrichtung II gemäß Fig. 1.

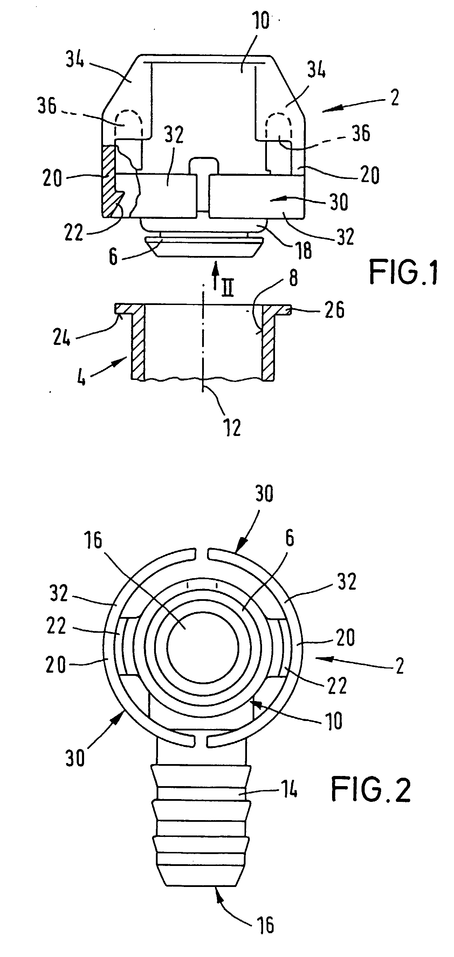

Gemäß Fig. 1 besteht ein erfindungsgemäßer Steckverbinder aus einem Steckerteil 2 und einem Aufnahmeteil 4, wobei das Steckerteil 2 einen Steckerschaft 6 zum Einstecken in eine Stecköffnung 8 des Aufnahmeteils 4 aufweist. Das Aufnahmeteil 4 ist in der Regel ein ortsfestes Anschlußteil, insbesondere eine Einspritzdüse eines Kraftfahrzeugmotors. Das Steckerteil 2 dient nun zum Anschluß einer nicht dargestellten Schlauchleitung an das Aufnahmeteil 4. Hierzu besteht das Steckerteil 2 aus einem Gehäuseabschnitt 10, an den sich einseitig der Steckerschaft 6 sowie anderseitig und vorzugsweise in einem rechten Winkel zur Steckachse 12 (Längsmittelachse des Steckerschaftes 6) ein Anschlußdorn 14 zum Aufschieben der Schlauchleitung anschließt (s. Fig. 2). Durch den Anschlußdorn 14, den Gehäuseabschnitt 10 und den Steckerschaft 6 verläuft ein innerer durchgehender Kanal 16, der seine Eintrittsöffnung am freien Ende des Anschlußdorns 14 und seine Austrittsöffnung am freien Ende des Steckerschaftes 6 besitzt. Auf dem Steckerschaft 6 ist in einer Ringnut eine Ringdichtung 18 angeordnet.

Zum Verriegeln des Steckerteils 2 mit dem Aufnahmeteil 4 im eingesteckten Zustand des Steckerschaftes 6 weist das Steckerteil 2 vorzugsweise zwei einander diametral gegenüberliegende, federelastische Rastarme 20 auf, die sich parallel zur Steckachse 12 jeweils mit radialem Abstand zum Steckerschaft 6 in Richtung auf dessen freies Ende hin erstrecken. Jeder der Rastarme 20 weist an seinem freien Ende einen radial nach innen weisenden Rastnocken 22 auf. Im eingesteckten Zustand hintergreifen die Rastarme 20 mit den Rastnocken 22 eine Stufenfläche 24 des Aufnahmeteils 4 arretierend, wobei die Stufenfläche 24 bevorzugt von einem umlaufenden, sich radial nach außen erstreckenden Ringsteg 26 des Aufnahmeteils 4 gebildet ist. Hierbei weisen die Rastnocken 22 derartige Schrägflächen auf, daß beim Einstecken des Steckerschaftes 6 in die Stecköffnung 8 durch Anlage am Ringsteg 26 des Aufnahmeteils 4 die Rastarme 20 selbsttätig radial nach außen gespreizt werden, bis die Rastnocken 22 hinter die Stufenfläche 24 einschnappen.

Insoweit entspricht der erfindungsgemäße Steckverbinder der eingangs erwähnten DE 42 14 105 Al, auf die hinsichtlich weiterer Einzelheiten an dieser Stelle in vollem Umfange Bezug genommen wird.

Erfindungsgemäß ist nun mit den Rastarmen 20 im Bereich der an den freien Enden gebildeten Rastnocken 22 ein Schutzringelement 30 verbunden, welches sich ausgehend von jedem Rastarm 20 in Umfangsrichtung und mit radialem Abstand zum Steckerschaft 6 derart erstreckt, daß die Bereiche der Rastnocken 22 seitlich abgedeckt sind (siehe insbesondere Fig. 1).

In der erfindungsgemäßen Ausführungsform ist das Schutzringelement 30 zweifach geschlitzt und hierdurch aus zwei Ringabschnitten 32 bestehend ausgebildet. Dabei ist dann jeder Rastarm 20 mit einem der Ringabschnitte 32 verbunden, und zwar - bezüglich der Umfangserstreckung des Ringabschnittes 32 - jeweils in dessen Mitte (siehe Fig. 2). Dabei bildet dann jeder Rastarm praktisch mit seinem den Rastnocken 22 aufweisenden Endbereich einen Teil des Schutzringelementes 30 bzw. des jeweiligen Ringabschnittes 32. In der bevorzugten Ausführungsform mit zwei Rastarmen 20 und daher auch zwei Ringabschnitten 32 des Schutzringelementes 30 erstreckt sich jeder der Ringabschnitte 32 in Umfangsrichtung über einen Winkelbereich von 160° bis nahezu 180°. Hierdurch werden die Bereiche der Rastnocken 22 optimal gegen Eindringen von Fremdkörpern geschützt, zumal das Schutzringelement 30 auch in axialer Richtung zumindest den gesamten Bereich der axialen Erstreckung der Rastnocken 22 überdeckt (Fig. 1).

Zweckmäßigerweise ist das Schutzringelement 30 bzw. sind die Ringabschnitte 32 einstückig an die Rastarme 20 angeformt. Dabei können die Rastarme 20 ebenfalls einstückig mit dem Steckerteil 2 bzw. dem Gehäuseabschnitt 10 ausgebildet sein, jedoch kann hier durchaus eine lösbare Verbindung vorgesehen sein. Beispielsweise können die Rastarme 20 über eine Clipverbindung am Gehäuseabschnitt 10 befestigt sein.

In einer in Fig. 1 veranschaulichten, vorteilhaften Weiterbildung der Erfindung sind im Verbindungsbereich zwischen den Rastarmen 20 und dem Steckerteil 2 bzw. dem Gehäuseabschnitt 10 Abdeckungen 34 gebildet, die den radialen Zwischenraum 36 zwischen dem jeweiligen Rastarm 20 und dem Steckerschaft 6 über eine bestimmte axiale Länge hinweg in Umfangsrichtung abdecken. Die axiale Länge dieser Überdeckung ist dabei natürlich so gewählt, daß jedenfalls das Einstecken möglich ist, d.h. der obere Bereich des Aufnahmeteils 4 findet jedenfalls Platz zwischen dem Steckerschaft und den Rastarmen 20. Die Abdeckungen 34 können sich gegebenenfalls auch - praktisch als "Hohlzylinder" - axial zumindest annähernd bis zum Schutzringelement 30 erstrecken, wobei allerdings die Radialelastizität der Rastarme 20 zu gewährleisten ist.

Der erfindungsgemäße Steckverbinder läßt sich sehr leicht stecken, wobei eine selbsttätige Verriegelung erfolgt. Des weiteren ist natürlich auch ein Lösen möglich, und zwar entweder über ein spezielles, in der Zeichnung nicht dargestelltes Löseelement (z.B. gemäß DE 42 14 105 A1), oder die radiale Spreizung der Rastarme 20 erfolgt über die Ringabschnitte 32 des erfindungsgemäßen Schutzringelementes 30.

Die vorliegende Erfindung ist nicht auf das konkret dargestellte und beschriebene Ausführungsbeispiel beschränkt, sondern umfaßt auch alle im Sinne der Erfindung gleichwirkenden Ausführungen. So liegt es beispielsweise im Rahmen der Erfindung, auch mehr als zwei Rastarme vorzusehen, diese können dann beispielsweise im Falle von drei Rastarmen zueinander um jeweils 120° versetzt angeordnet sein.

## Patentansprüche

1. Steckverbinder für Schlauch- und/oder Rohrleitungen, bestehend aus einem Steckerteil (2) mit einem in eine Stecköffnung (8) eines Aufnahmeteils (4) einsteckbaren Steckerschaft (6) und mit mindestens zwei federelastischen Rastarmen (20), die sich parallel zur Steckachse (12) jeweils mit Abstand zum Steckerschaft (6) in Richtung dessen freien Endes erstrecken und im eingesteckten Zustand mit Rastnocken (22) eine Stufenfläche (24) des Aufnahmeteils (4) arretierend hintergreifen, wobei mit den Rastarmen (20) im Bereich der Rastnocken (22) ein Ring verbunden ist, der sich mit radialem Abstand zum Steckerschaft (6) in Umfangsrichtung erstreckt,
**dadurch gekennzeichnet,** daß der Ring als ein an mindestens zwei Umfangsstellen geschlitztes und so aus mindestens zwei relativ steifen, formstabilen Ringabschnitten (32) bestehendes Schutzringelement (30) derart ausgebildet ist, daß der Bereich der Rastnocken (22) in Querrichtung weitgehend abgedeckt und dadurch gegen ein Eindringen von Gegenständen bzw. Fremdkörpern geschützt ist.

2. Steckverbinder nach Anspruch 1,
**dadurch gekennzeichnet,** daß jeder Rastarm (20) mit einem der Ringabschnitte (32) und insbesondere in dessen Umfangsmitte verbunden ist.

3. Steckverbinder nach Anspruch 1 oder 2,
**dadurch gekennzeichnet,** daß das Steckerteil (2) zwei einander diametral gegenüberliegende Rastarme (20) aufweist.

4. Steckverbinder nach einem oder mehreren der Ansprüche 1 bis 3,
**dadurch gekennzeichnet,** daß sich jeder Ringabschnitt (32) des Schutzringelementes (30) in Umfangsrichtung über einen Winkel von 160° bis 180° erstreckt.

5. Steckverbinder nach einem oder mehreren der Ansprüche 1 bis 4,
**dadurch gekennzeichnet,** daß das Schutzringelement (30) in axialer Richtung zumindest den gesamten Bereich der Rastnocken (22) überdeckt.

6. Steckverbinder nach einem oder mehreren der Ansprüche 1 bis 5,
**dadurch gekennzeichnet,** daß die Ringabschnitte (32) des Schutzringelementes (30) einstückig an die Rastarme (20) angeformt sind.

7. Steckverbinder nach einem oder mehreren der Ansprüche 1 bis 6,
**dadurch gekennzeichnet,** daß im Verbindungsbereich zwischen den Rastarmen (20) und dem Steckerteil (2) Abdeckungen (34) gebildet sind, die den radialen Zwischenraum (36) zwischen dem jeweiligen Rastarm (20) und dem Steckerschaft (6) über eine bestimmte axiale Länge in Umfangsrichtung abdecken.

## Claims

1. Plug-in connector for hose lines and/or pipelines, comprising a plug part (2) with a plug shank (6), which can be inserted into a plug-in opening (8) of a receiving part (4), and with at least two resilient engaging arms (20), which extend parallel to the plugging axis (12) respectively at a distance from the plug shank (6) in the direction of the free end of the latter and, in the plugged-in state, engage in an arresting manner, by way of engaging lugs (22), behind a step surface (24) of the receiving part (4), it being the case that connected to the engaging arms (20), in the region of the engaging lugs (22), is a ring which extends circumferentially at a radial distance from the plug shank (6), characterized in that the ring is designed as a protective ring element (30), which is split at at least two circumferential locations and thus comprises at least two relatively stiff, dimensionally stable ring sections (32), such that the region of the engaging lugs (22) is largely covered in the transverse direction and is thus protected against the entry of objects or foreign bodies.

2. Plug-in connector according to Claim 1, characterized in that each engaging arm (20) is connected to one of the ring sections (32), in particular in the centre of the circumference thereof.

3. Plug-in connector according to Claim 1 or 2, characterized in that the plug part (2) has two diametrically opposite engaging arms (20).

4. Plug-in connector according to one or more of Claims 1 to 3, characterized in that each ring section (32) of the protective ring element (30) extends over an angle of from 160° to 180° in the circumferential direction.

5. Plug-in connector according to one or more of Claims 1 to 4, characterized in that the protective ring element (30) covers over at least the entire region of the engaging lugs (22) in the axial direction.

6. Plug-in connector according to one or more of Claims 1 to 5, characterized in that the ring sections (32) of the protective ring element (30) are integrally formed on the engaging arms (20).

7. Plug-in connector according to one or more of Claims 1 to 6, characterized in that formed in the region of the connection between the engaging arms (20) and the plug part (2) are coverings (34) which cover the radial interspace (36) between the respective engaging arm (20) and the plug shank (6) over a certain axial length in the circumferential direction.

## Revendications

1. Raccord à emmanchement pour conduites formées de tuyaux et/ou de tubes, composé d'une partie mâle (2) possédant une tige de partie mâle (6) pouvant être emmanchée dans une ouverture d'emmanchement (8) d'une partie réceptrice (4), et comprenant au moins deux bras de verrouillage (20) élastiques à la façon de ressorts, qui s'étendent parallèlement à l'axe d'emmanchement (12), chacun à un certain écartement de la tige de partie mâle (6), en direction de l'extrémité libre de cette tige et qui, à l'état emmanché, s'accrochent pour le blocage, par des ergots de verrouillage (22), derrière une surface en escalier (24) de la partie réceptrice (4), dans lequel une bague qui s'étend circonférentiellement à un certain écartement radial de la tige mâle (6) est reliée aux bras de verrouillage (20) dans la région des ergots de verrouillage (22),
caractérisé en ce que la bague est réalisée sous la forme d'un élément de protection annulaire (30) fendu en au moins deux points de la circonférence et ainsi composé d'au moins deux segments de bague (32) relativement raides, possédant une stabilité de forme, de telle manière que la région des ergots de verrouillage (22) soit largement recouverte dans la direction transversale et, de cette façon, protégée de la pénétration d'objets ou de corps étrangers.

2. Raccord à emmanchement selon la revendication 1,
caractérisé en ce que chaque bras de verrouillage (20) est relié à un des segments de bague (32), en particulier au milieu circonférentiel de ce dernier.

3. Raccord à emmanchement selon la revendication 1 ou 2,
caractérisé en ce que la partie mâle (2) présente deux bras de verrouillage (20) diamétralement opposés entre eux.

4. Raccord à emmanchement selon une ou plusieurs des revendications 1 à 3,
caractérisé en ce que chaque segment de bague (32) de l'élément de protection annulaire (30) s'étend dans la direction circonférentielle sur un angle de 160° à 180°.

5. Raccord à emmanchement selon une ou plusieurs des revendications 1 à 4,
caractérisé en ce que, dans la direction axiale, l'élément de protection annulaire (30) recouvre au moins toute la zone des ergots de verrouillage (22).

6. Raccord à emmanchement selon une ou plusieurs des revendications 1 à 5,
caractérisé en ce que les segments de bague (32) de l'élément de protection annulaire (30) sont venus de matière en une seule pièce sur les bras de verrouillage.

7. Raccord à emmanchement selon une ou plusieurs des revendications 1 à 6,
caractérisé en ce que, dans la région de liaison entre les bras de verrouillage (20) et la partie mâle (2) sont formés des recouvrements (34) qui ferment la cavité intermédiaire radiale (36) entre le bras de verrouillage (20) respectif et la tige de la partie mâle (6), dans la direction circonférentielle sur une certaine longueur axiale.
